# EUROPEAN PATENT APPLICATION

(11) **EP 4 589 516 A1**
(43) Date of publication of application: **23.07.2025**
(21) Application number: 22960309.7
(22) Date of filing: 30.09.2022
(51) Int. Cl.: G06Q 30/02, H04H 60/63

(54) **AUDIO ADVERTISEMENT DELIVERY METHOD, DEVICE AND SYSTEM**

(71) Applicant: Huawei Technologies Co., Ltd., Shenzhen, Guangdong 518129 (CN)
(72) Inventor: XIA, Zenghua, Shenzhen, Guangdong 518129 (CN); MA, Zhongrui, Shenzhen, Guangdong 518129 (CN)
(74) Representative: Maiwald GmbH
(86) International application number: PCT/CN2022/123309
(87) International publication number: WO 2024/065690

(57) **Abstract**

An audio advertisement delivery method is provided, including: A client (100) sends an advertisement request to a cloud apparatus (20, 90, 110) when playing an audio program (301). The advertisement request includes information about the audio program, an identifier of a target advertisement slot, and a user characteristic. The cloud apparatus (20, 90, 110) determines a vector representation of the target advertisement slot based on the information about the audio program and the identifier of the target advertisement slot (302). The vector representation of the target advertisement slot is used to describe content related in the audio program in a period of time before the target advertisement slot. The cloud apparatus (20, 90, 110) determines, based on the user characteristic and the vector representation of the target advertisement slot, an audio advertisement matching the target advertisement slot (303). The cloud apparatus (20, 90, 110) sends the audio advertisement to the client (100) (304). The client (100) plays the audio advertisement when the audio program is played to the target advertisement slot (305). In this way, the audio advertisement has a higher matching degree with the audio program. In addition, the user characteristic is combined, so that a personalized requirement of a user can be better met, and delivery effect of the audio advertisement can be improved.

## Description

### TECHNICAL FIELD

This application relates to the field of computer technologies, and specifically, to an audio advertisement delivery method, a device, and a system.

### BACKGROUND

A podcast is a recorded webcast or web-based audio program, for example, an audio book, a cross talk, or current news. A podcast market is also expanding, with hundreds of millions of users. The booming growth of podcasts has led to a continuous increase in a corresponding advertising market share. With the development of podcasts both at home and abroad, audio advertising has also become an important advertising form.

To insert an audio advertisement into an audio program, it is necessary to first mine an advertisement slot offline in the audio program, that is, a position at which the audio advertisement is inserted in the audio program. Then, the audio advertisement is configured for each advertisement slot. In this way, when the audio program is played to the advertisement slot, the audio advertisement configured for the advertisement slot is played.

Such an audio advertisement configured offline poorly matches the audio program, which often affects continuity of listening to the audio program by a user, resulting in poor delivery effect.

### SUMMARY

This application provides an audio advertisement delivery method, used to deliver, to a user in an audio program, an audio advertisement that meets a personalized requirement of the user. This application further provides a corresponding device, a system, a computer-readable storage medium, a computer program product, and the like.

A first aspect of this application provides an audio advertisement delivery method, including: A cloud receives an advertisement request from a client. The advertisement request includes information about an audio program, an identifier of a target advertisement slot, and a user characteristic, the target advertisement slot is one of at least one advertisement slot mined in the audio program, and the advertisement request is triggered when the client plays the audio program. The cloud determines a vector representation of the target advertisement slot based on the information about the audio program and the identifier of the target advertisement slot. The vector representation of the target advertisement slot is used to describe content related in the audio program in a period of time before the target advertisement slot. The cloud obtains, based on the user characteristic and the vector representation of the target advertisement slot, an audio advertisement matching the target advertisement slot. The cloud sends the audio advertisement to the client. The audio advertisement is used by the client to be played when the audio program is played to the target advertisement slot.

**In** this application, the cloud may be software or a service of a cloud platform, or may be software or a service deployed on a node in a network, such as an edge node. The cloud can run on an independent physical machine or on a virtualized resource.

In this application, the client may be a terminal device, or may be an application. For example, the application is run on the terminal device for use by a user.

In this application, a time when the client plays the audio program usually means a time when the client plays the audio program near the target advertisement slot. Usually, the advertisement request is triggered at a preset time point before the target advertisement slot is reached. The preset time point may be a time point that is five seconds or another value representing a time length before the target advertisement slot.

In this application, the audio advertisement is an advertisement played in an audio manner. The advertisement request is used to request an audio advertisement from the cloud.

In this application, the information about the audio program may be an identifier, an index, or the like of the audio program. The audio program is an audio program to be played, being played, or just played on the client. The audio program may be an audio book, a song in an audio form, a cross talk, current news, or the like.

In this application, in an advertisement slot mining phase, one or more advertisement slots may be mined in the audio program, and each advertisement slot in one audio program has a unique identifier. Each advertisement slot has a vector representation. An identifier of a same advertisement slot is associated with a vector representation of the advertisement slot. In addition, a representation and a vector representation of at least one advertisement slot in each audio program and the audio program are stored in an associated manner. Such information may be stored in an audio content library of a cloud platform. The vector representation of the advertisement slot is a vector obtained by encoding content related in a period of time before the advertisement slot. The "period of time" in this application may be a duration, for example, one minute or another value representing a time length. For another example, in an implementation, a specific value may be preset. In an implementation, the duration may be randomly selected within a range.

In this application, the user characteristic may include a user profile and a user behavioral characteristic. The user profile may include basic information of the user, such as a gender, an age, and a hobby. The user behavioral characteristic may include behavior information such as clicking, adding to favorites, and commenting on a historical audio program by the user.

In this application, identifiers of all advertisement slots associated with the audio program and vector representations of the advertisement slots may be found based on the information about the audio program. Further, the vector representation of the target advertisement slot may be determined based on the identifier of the target advertisement slot.

In this application, one or more audio advertisements closely related to the audio program that the user is currently listening to before the target advertisement slot may be determined based on the vector representation of the target advertisement slot, and then, the audio advertisements may be further filtered or processed based on the user characteristic, to obtain the audio advertisement matching the target advertisement slot. Because the audio advertisement determined in this application has a higher matching degree with the audio program, and the user characteristic is combined, a personalized requirement of the user can be better met, and delivery effect of the audio advertisement can be improved.

In a possible implementation, the foregoing step that the cloud determines, based on the user characteristic and the vector representation of the target advertisement slot, an audio advertisement matching the target advertisement slot includes: The cloud retrieves a plurality of audio advertisements from an audio advertisement library based on the vector representation of the target advertisement slot. The cloud obtains, based on the user characteristic, the audio advertisement matching the target advertisement slot from the plurality of audio advertisements.

In this possible implementation, the cloud retrieves, based on the vector representation of the target advertisement slot, a plurality of audio advertisements closely related to the audio program that the user is currently listening to before the target advertisement slot, and then selects an advertisement with a highest matching degree with the user characteristic from the plurality of audio advertisements. In this way, a matching degree between the audio advertisement and the audio program that is being played on the client can be improved.

In a possible implementation, the foregoing step that the cloud obtains, based on the user characteristic, the audio advertisement matching the target advertisement slot from the plurality of audio advertisements includes: The cloud predicts completion rates of the plurality of audio advertisements based on the user characteristic and an advertisement ranking model. An audio advertisement with a highest completion rate is the audio advertisement matching the target advertisement slot or a source advertisement of the audio advertisement matching the target advertisement slot, and the advertisement ranking model is a model whose input is a user characteristic and whose output is a completion rate.

In this possible implementation, the completion rate is a predicted probability that the audio advertisement is played in its entirety. A closer alignment of content and a style of one audio advertisement to a user preference indicates a higher probability that the audio advertisement is played in its entirety and indicates better delivery effect after advertisement delivery. Therefore, the completion rates of the plurality of retrieved audio advertisements may be predicted based on the user characteristic, and the audio advertisement with the highest completion rate is determined as the audio advertisement or the source advertisement of the audio advertisement, thereby improving delivery effect of the audio advertisement.

In a possible implementation, when the audio advertisement with the highest completion rate is the source advertisement of the audio advertisement matching the target advertisement slot, the method further includes: The cloud adjusts a style of the audio advertisement with the highest completion rate based on a style of the audio program and the user characteristic, to obtain the audio advertisement matching the target advertisement slot.

In this possible implementation, after determining the audio advertisement with the highest completion rate by using the advertisement ranking model, the cloud may adjust the style of the audio advertisement with the highest completion rate based on the user characteristic and the style of the audio program that is to be played or is being played by the user. In this way, acceptance of the audio advertisement by the user can be improved, thereby improving delivery effect of the audio advertisement.

In a possible implementation, the foregoing step that the cloud adjusts a style of the audio advertisement with the highest completion rate based on a style of the audio program and the user characteristic, to obtain the audio advertisement matching the target advertisement slot includes: The cloud adjusts an object sound in the audio advertisement with the highest completion rate based on a style vector of an object sound in the audio program and a style vector of a user preference. The style vector of the object sound in the audio program is obtained by encoding the object sound in the audio program, and the style vector of the user preference is obtained by encoding the user characteristic. The cloud adjusts background music in the audio advertisement with the highest completion rate based on a style vector of background music in the audio program and the style vector of the user preference. The style vector of the background music in the audio program is obtained by encoding the background music in the audio program. The cloud merges an adjusted object sound in the audio advertisement with the highest completion rate and adjusted background music in the audio advertisement with the highest completion rate, to obtain the audio advertisement matching the target advertisement slot.

In this possible implementation, if the audio program includes the object sound and the background music, the object sound and the background music of the audio program may be separated. Next, the style vector of the object sound and the style vector of the background music are obtained through encoding. Then, the object sound and the background music in the audio advertisement with the highest score are adjusted with reference to the style vector of the user preference, to obtain the audio advertisement. A style of the audio advertisement after adjustment is consistent with the style of the audio program, so that a style preference of the user can be met and user experience can be improved, thereby improving delivery effect of the audio advertisement.

In a possible implementation, before the cloud receives the advertisement request sent by the client, the method further includes: The cloud determines at least one advertisement slot based on time domain information of the audio program in a voice state and text content obtained after the audio program is converted into text. The cloud encodes text content in a period of time before each advertisement slot in the at least one advertisement slot, to obtain a vector representation of each advertisement slot.

In this possible implementation, in this application, the time domain information may include an amplitude (the amplitude may also be described as a sound intensity), a change of an amplitude with time, and the like.

The cloud may further execute an advertisement slot mining task before receiving the advertisement request. An advertisement slot mining process may be determining an advertisement slot of the audio program based on the time domain information of the audio program in the voice state and the text content obtained after the audio program is converted into text. In this application, the advertisement slot may be jointly mined based on the time domain information and the text content of the audio program. Therefore, quality of the mined advertisement slot is relatively high, and continuity of the audio program is usually not affected because the advertisement is inserted into the advertisement slot, thereby enhancing user experience and improving delivery effect of the audio advertisement.

In a possible implementation, the method further includes: The cloud stores the audio program, an identifier of each advertisement slot, and the vector representation of each advertisement slot in an associated manner.

In this possible implementation, the audio program, the identifier of each advertisement slot in the audio program, and the vector representation of each advertisement slot are stored in an associated manner, so that when the client sends the advertisement request, an audio advertisement matching a requested target advertisement slot can be quickly determined, thereby improving delivery efficiency of the audio advertisement.

In a possible implementation, the foregoing step that the cloud determines at least one advertisement slot based on time domain information of the audio program in a voice state and text content obtained after the audio program is converted into text includes: When the time domain information is an amplitude, if a duration for which an amplitude of the audio program in the voice state is continuously less than an amplitude threshold exceeds a first threshold, the cloud determines the duration for which the amplitude is continuously less than the amplitude threshold as a first basic advertisement slot. If a time interval between two adjacent terms in the text content obtained after conversion of the audio program is greater than a second threshold, the cloud determines the time interval between the two adjacent terms as a second basic advertisement slot. The time interval between the two adjacent terms is determined based on a timestamp for each term during text conversion. The cloud determines the at least one advertisement slot from a union of the first basic advertisement slot and the second basic advertisement slot.

In this possible implementation, the advertisement slot is selected from the union of the first basic advertisement slot and the second basic advertisement slot, so that a range of advertisement slot selection can be expanded.

In a possible implementation, the foregoing step that the cloud determines the at least one advertisement slot from a union of the first basic advertisement slot and the second basic advertisement slot includes: The cloud selects at least one advertisement slot with a largest weight from the union of the first basic advertisement slot and the second basic advertisement slot, and determines the at least one advertisement slot as the at least one advertisement slot in the audio program. A weight of each advertisement slot in the at least one advertisement slot is determined based on a punctuation and/or a segmentation position of a text segment corresponding to each advertisement slot.

In this possible implementation, a punctuation, text segmentation, or the like can be used to boost a weight of a corresponding basic advertisement slot, that is, to increase a weight of a corresponding advertisement slot. Then, at least one basic advertisement slot with a largest weight is selected and determined as the at least one advertisement slot in the audio program. In this way, quality of the selected advertisement slot can be improved.

In a possible implementation, the user characteristic includes a user profile and a behavioral characteristic of a user for a historical audio program.

A second aspect of this application provides an audio advertisement delivery method, including: A client sends an advertisement request to a cloud when playing an audio program. The advertisement request includes information about the audio program, an identifier of a target advertisement slot, and a user characteristic, and the target advertisement slot is one of at least one advertisement slot mined in the audio program. The client receives an audio advertisement that matches the target advertisement slot and that is sent by the cloud. The client plays the audio advertisement when the audio program is played to the target advertisement slot.

In this application, a time when the client plays the audio program usually means a time when the client plays the audio program near the target advertisement slot. Usually, the advertisement request is triggered at a preset time point before the target advertisement slot is reached. The preset time point may be a time point that is five seconds or another value representing a time length before the target advertisement slot.

In a possible implementation, the user characteristic includes a user characteristic and a preference characteristic of a user for an audio program.

A third aspect of this application provides an advertisement slot mining method, including: A cloud obtains an audio program of a to-be-mined advertisement slot. The cloud determines at least one advertisement slot based on time domain information of the audio program in a voice state and text content obtained after the audio program is converted into text. The cloud encodes text content in a period of time before each advertisement slot in the at least one advertisement slot, to obtain a vector representation of each advertisement slot.

In a possible implementation, the method further includes: The cloud stores the audio program, an identifier of each advertisement slot, and the vector representation of each advertisement slot in an associated manner.

In a possible implementation, the foregoing step that the cloud determines at least one advertisement slot based on time domain information of the audio program in a voice state and text content obtained after the audio program is converted into text includes: When the time domain information is an amplitude, if a duration for which an amplitude of the audio program in the voice state is continuously less than an amplitude threshold exceeds a first threshold, the cloud determines the duration for which the amplitude is continuously less than the amplitude threshold as a first basic advertisement slot. If a time interval between two adjacent terms in the text content obtained after conversion of the audio program is greater than a second threshold, the cloud determines the time interval between the two adjacent terms as a second basic advertisement slot. The time interval between the two adjacent terms is determined based on a timestamp for each term during text conversion. The cloud determines the at least one advertisement slot from a union of the first basic advertisement slot and the second basic advertisement slot.

In a possible implementation, the foregoing step that the cloud determines the at least one advertisement slot from a union of the first basic advertisement slot and the second basic advertisement slot includes: The cloud selects at least one advertisement slot with a largest weight from the union of the first basic advertisement slot and the second basic advertisement slot, and determines the at least one advertisement slot as the at least one advertisement slot in the audio program. A weight of each advertisement slot in the at least one advertisement slot is determined based on a punctuation and/or a segmentation position of a text segment corresponding to each advertisement slot.

According to a fourth aspect of this application, a cloud apparatus is provided, and is configured to perform the method according to the first aspect or any possible implementation of the first aspect. Specifically, the cloud apparatus includes modules or units configured to perform the method according to the first aspect or any possible implementation of the first aspect, for example, a processing unit, a sending unit, and a receiving unit.

According to a fifth aspect of this application, a client is provided, and is configured to perform the method according to the second aspect. Specifically, the client includes modules or units configured to perform the method according to the second aspect or any possible implementation of the second aspect, for example, a receiving unit, a displaying unit, and a sending unit.

According to a sixth aspect of this application, a cloud apparatus is provided, and is configured to perform the method according to the first aspect or any possible implementation of the first aspect. Specifically, the cloud apparatus includes modules or units configured to perform the method according to the third aspect or any possible implementation of the third aspect, for example, a processing unit, a sending unit, and a receiving unit.

According to a seventh aspect of this application, a cloud apparatus is provided. The cloud apparatus may include at least one processor, a memory, and a communication interface. The processor is coupled to the memory and the communication interface. The memory is configured to store instructions, the processor is configured to execute the instructions, and the communication interface is configured to communicate with another network element under control of the processor. When the instructions are executed by the processor, the processor is enabled to perform the method according to the first aspect or any possible implementation of the first aspect.

According to an eighth aspect of this application, a client is provided, including a transceiver, a processor, and a memory. The transceiver and the processor are coupled to the memory. The memory is configured to store a program or instructions. When the program or the instructions are executed by the processor, a cloud apparatus is enabled to perform the method according to the second aspect or any possible implementation of the second aspect.

According to a ninth aspect of this application, a cloud apparatus is provided. The cloud apparatus may include at least one processor, a memory, and a communication interface. The processor is coupled to the memory and the communication interface. The memory is configured to store instructions, the processor is configured to execute the instructions, and the communication interface is configured to communicate with another network element under control of the processor. When the instructions are executed by the processor, the processor is enabled to perform the method according to the third aspect or any possible implementation of the third aspect.

According to a tenth aspect of this application, a chip system is provided. The chip system includes one or more interface circuits and one or more processors. The interface circuit and the processor are interconnected through a line. The interface circuit is configured to receive a signal from a memory of a cloud apparatus, and send the signal to the processor, where the signal includes computer instructions stored in the memory. When the processor executes the computer instructions, the cloud apparatus performs the method according to the first aspect or any possible implementation of the first aspect.

According to an eleventh aspect of this application, a chip system is provided. The chip system includes one or more interface circuits and one or more processors. The interface circuit and the processor are interconnected through a line. The interface circuit is configured to receive a signal from a memory of a client, and send the signal to the processor, where the signal includes computer instructions stored in the memory. When the processor executes the computer instructions, the client performs the method according to the second aspect or any possible implementation of the second aspect.

According to a twelfth aspect of this application, a chip system is provided. The chip system includes one or more interface circuits and one or more processors. The interface circuit and the processor are interconnected through a line. The interface circuit is configured to receive a signal from a memory of a cloud apparatus, and send the signal to the processor, where the signal includes computer instructions stored in the memory. When the processor executes the computer instructions, the cloud apparatus performs the method according to the third aspect or any possible implementation of the third aspect.

According to a thirteenth aspect of this application, a computer-readable storage medium is provided. The computer-readable storage medium stores a computer program or instructions. When the computer program or the instructions are run on a computer, the computer is enabled to perform the method according to the first aspect or any possible implementation of the first aspect.

According to a fourteenth aspect of this application, a computer-readable storage medium is provided. The computer-readable storage medium stores a computer program or instructions. When the computer program or the instructions are run on a computer, the computer is enabled to perform the method according to the second aspect or any possible implementation of the second aspect.

According to a fifteenth aspect of this application, a computer-readable storage medium is provided. The computer-readable storage medium stores a computer program or instructions. When the computer program or the instructions are run on a computer, the computer is enabled to perform the method according to the third aspect or any possible implementation of the third aspect.

According to a sixteenth aspect of this application, a computer device program product is provided. The computer device program product includes computer device program code. When the computer device program code is executed on a computer device, the computer device is enabled to perform the method according to the first aspect or any possible implementation of the first aspect.

According to a seventeenth aspect of this application, a computer device program product is provided. The computer device program product includes computer device program code. When the computer device program code is executed on a computer device, the computer device is enabled to perform the method according to the second aspect or any possible implementation of the second aspect.

According to an eighteenth aspect of this application, a computer device program product is provided. The computer device program product includes computer device program code. When the computer device program code is executed on a computer device, the computer device is enabled to perform the method according to the third aspect or any possible implementation of the third aspect.

According to a nineteenth aspect of this application, an audio advertisement system is provided. The audio advertisement system includes a cloud apparatus and a client. The cloud apparatus is configured to perform the method according to the first aspect or any possible implementation of the first aspect, and the client is configured to perform the method according to the second aspect or any possible implementation of the second aspect.

According to a twentieth aspect of this application, an audio advertisement system is provided. The audio advertisement system includes a cloud apparatus and an audio content library. The cloud apparatus obtains an audio program from the audio content library, and performs the method according to the third aspect or any possible implementation of the third aspect.

For technical effects brought by any one of the second aspect to the twentieth aspect or the possible implementations of the second aspect to the twentieth aspect, refer to technical effects brought by the first aspect or different possible implementations of the first aspect. Details are not described herein again.

### BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application, and a person skilled in the art may still derive other drawings from these accompanying drawings without creative efforts.
FIG. 1A is a diagram of an architecture of an audio advertisement system according to an embodiment of this application;
FIG. 1B is a diagram of another architecture of an audio advertisement system according to an embodiment of this application;
FIG. 2A is a diagram of a structure of a client according to an embodiment of this application;
FIG. 2B is a diagram of a structure of a cloud apparatus according to an embodiment of this application;
FIG. 3 is a diagram of an embodiment of an audio advertisement delivery method according to an embodiment of this application;
FIG. 4 is a diagram of a structure of an advertisement ranking model according to an embodiment of this application;
FIG. 5 is a diagram of another embodiment of an audio advertisement delivery method according to an embodiment of this application;
FIG. 6 is a diagram of an embodiment of an advertisement slot mining method according to an embodiment of this application;
FIG. 7 is a diagram of a scenario example according to an embodiment of this application;
FIG. 8 is a diagram of an embodiment of advertisement slot mining and audio advertisement delivery according to an embodiment of this application;
FIG. 9 is diagram of another structure of a cloud apparatus according to an embodiment of this application;
FIG. 10 is a diagram of another structure of a client according to an embodiment of this application; and
FIG. 11 is diagram of another structure of a cloud apparatus according to an embodiment of this application.

### DESCRIPTION OF EMBODIMENTS

The following describes embodiments of this application with reference to accompanying drawings. It is clear that the described embodiments are merely some rather than all of embodiments of this application. A person of ordinary skill in the art may know that with development of technologies and emergence of new scenarios, the technical solutions provided in embodiments of this application are also applicable to similar technical problems.

In the specification, claims, and accompanying drawings of this application, terms such as "first" and "second" are intended to distinguish between similar objects, but do not necessarily indicate a specific order or sequence. It should be understood that the data termed in such a way are interchangeable in proper circumstances, so that embodiments described herein can be implemented in an order other than the order illustrated or described herein. **In** addition, the terms "include", "have", and any other variant thereof are intended to cover a non-exclusive inclusion. For example, a process, method, system, product, or device including a series of steps or units is not necessarily limited to those expressly listed steps or units, but may include other steps or units not expressly listed or inherent to the process, method, product, or device.

Embodiments of this application provide an audio advertisement delivery method, used to deliver, to a user in an audio program, an audio advertisement that meets a personalized requirement of the user. This application further provides a corresponding device, a system, a computer-readable storage medium, a computer program product, and the like. Details are separately described in the following.

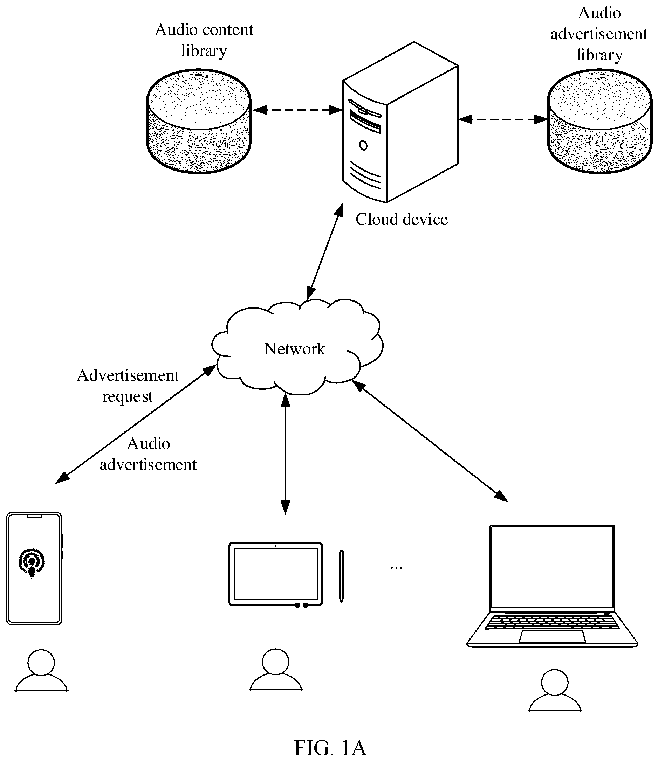

FIG. 1A is a diagram of an architecture of an audio advertisement system according to an embodiment of this application.

As shown in FIG. 1A, the audio advertisement system provided in this embodiment of this application includes a cloud and a plurality of clients, and the cloud may communicate with the plurality of clients through a network. The audio advertisement system provided in this embodiment of this application may further include an audio content library and an audio advertisement library. Certainly, the audio content library and/or the audio advertisement library may alternatively be integrated into the cloud.

In this embodiment of this application, the cloud may be software or a service of a cloud platform, or may be software or a service deployed on a node in a network, such as an edge node. The client may be a terminal device, or may be an application. For example, the application is run on the terminal device for use by a user.

When using a podcast-type application, the client may obtain an audio program from the audio content library, and may send an advertisement request to the cloud when playing the audio program. The cloud may determine, from the audio advertisement library based on information that is related to the audio program and that is carried in the advertisement request and a user characteristic, an audio advertisement that can meet a personalized requirement of the user, and send the audio advertisement to the client, so that the client can deliver the audio advertisement to the audio program when playing the audio program.

In this application, the audio advertisement is an advertisement played in an audio manner. The advertisement request is used to request an audio advertisement from the cloud.

In this application, the user characteristic may include a user profile and a user behavioral characteristic. The user profile may include basic information of the user, such as a gender, an age, and a hobby. The user behavioral characteristic may include behavior information such as clicking, adding to favorites, and commenting on a historical audio program by the user.

The audio advertisement system provided in this embodiment of this application may determine an audio advertisement with reference to the user characteristic. In this way, the determined audio advertisement can better meet a personalized requirement of the user, and delivery effect of the audio advertisement can be improved.

In this embodiment of this application, the information related to the audio program may include an identifier of the audio program, and may further include an identifier of an advertisement slot that is mined in the audio program in advance. In this way, the cloud may determine an audio advertisement for an advertisement slot specified in the advertisement request, so that a matching degree between the audio advertisement and the audio program can be further improved. The advertisement slot is a time segment for playing an audio advertisement in an audio program.

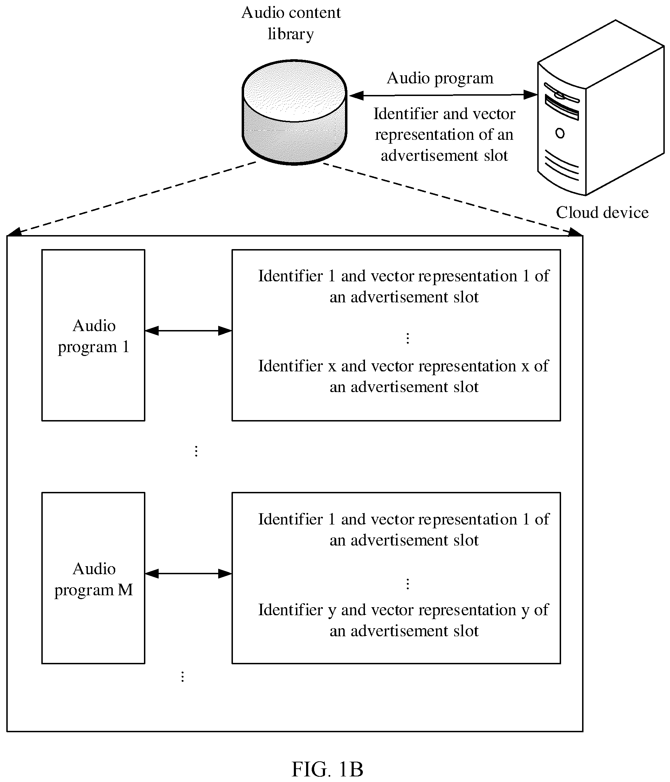

In this embodiment of this application, an advertisement slot mining process is usually offline mining, and certainly, may alternatively be online mining. The following describes an audio advertisement system for mining an advertisement slot with reference to FIG. 1B.

As shown in FIG. 1B, the audio advertisement system may include a cloud and an audio content library. The audio content library may be integrated in the cloud, and the cloud may be the same device as the cloud in FIG. 1A, or may be a different device.

When mining the advertisement slot, the cloud may obtain, from the audio content library, an audio program of a to-be-mined advertisement slot. Then, the cloud determines at least one advertisement slot based on time domain information of the audio program in the voice state and text content obtained after the audio program is converted into text. The cloud encodes text content in a period of time before each advertisement slot in the at least one advertisement slot, to obtain a vector representation of each advertisement slot.

In this embodiment of this application, the time domain information may include an amplitude (the amplitude may also be described as a sound intensity), a change of an amplitude with time, and the like.

The cloud stores an identifier of each advertisement slot in a same audio program, a vector representation of each advertisement slot, and the audio program in an associated manner. If the audio program is stored in the audio content library, the identifier of each advertisement slot in the same audio program and the vector representation of each advertisement slot may be returned to the audio content library, and the audio content library stores the audio program, the identifier of each advertisement slot of the audio program, and the vector representation of each advertisement slot in an associated manner. As shown in FIG. 1B, the audio content library may store a plurality of audio programs and identifiers and vector representations of advertisement slots in the audio programs in an associated manner. For example, an audio program 1 corresponds to x advertisement slots, and identifiers and vector representations of the advertisement slots corresponding to the audio program 1 are respectively an advertisement slot 1, a vector representation 1, ..., an advertisement slot x, and a vector representation x. An audio program M corresponds to y advertisement slots, and identifiers and vector representations of the advertisement slots corresponding to the audio program 1 are respectively an advertisement slot 1, a vector representation 1, ..., an advertisement slot y, and a vector representation y. x, y, and M are all positive integers.

According to an advertisement slot mining scheme provided in embodiments of this application, the advertisement slot may be jointly mined based on the time domain information of the audio program in a voice state and the text content obtained after the audio program is converted into a text format. Therefore, quality of the mined advertisement slot is relatively high, and continuity of the audio program is usually not affected because the audio advertisement is inserted into the advertisement slot, thereby enhancing user experience and improving delivery effect of the audio advertisement. In addition, in the audio content library, the audio program, the identifier of each advertisement slot in the audio program, and the vector representation of each advertisement slot are stored in an associated manner, so that when a client sends an advertisement request, an audio advertisement matching a requested target advertisement slot can be quickly determined, thereby improving delivery efficiency of the audio advertisement.

In embodiments of this application, the cloud may be a physical machine, or may be a computing instance such as a virtual machine (virtual machine, VM) or a container (container), or the cloud may be understood as an advertisement system, or the cloud is a device in an advertisement system.

When the client is a terminal device, the terminal device (which may also be referred to as user equipment (user equipment, UE)) is a device having a wireless transceiver function, and may be deployed on land, including indoor or outdoor, handheld, or in-vehicle deployment; or may be deployed on water (for example, on a steamship); or may be deployed in the air (for example, on an airplane, a balloon, and a satellite). The terminal may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wireless terminal in an internet of things (internet of things, IoT), or the like.

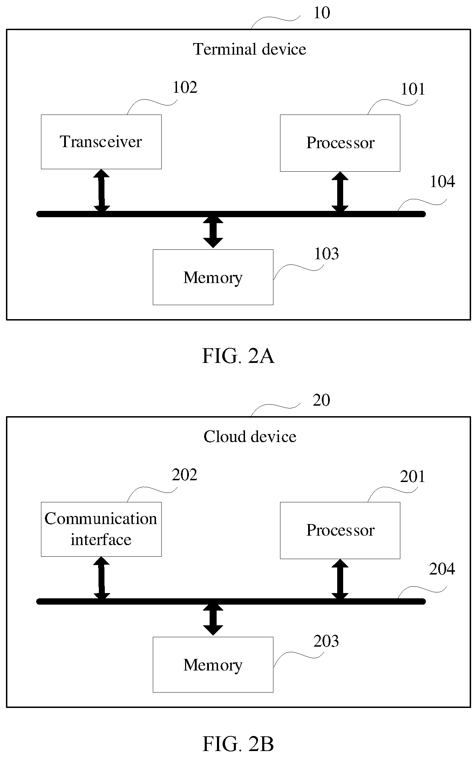

For a structure of the terminal device provided in this embodiment of this application, refer to FIG. 2A for understanding. For a structure of a cloud apparatus, refer to FIG. 2B for understanding.

FIG. 2A is a diagram of a structure of a terminal device according to an embodiment of this application. As shown in FIG. 2A, the terminal device may include a processor 101, a transceiver 102, a memory 103, and a bus 104. The processor 101, the transceiver 102, and the memory 103 are connected to each other through the bus 104. In this embodiment of this application, the processor 101 is configured to control and manage an action of the terminal device 10. For example, the processor 101 is configured to control a playback process of an audio program and an audio advertisement. The transceiver 102 is configured to support the terminal device 10 in performing communication. For example, the transceiver 102 may perform steps of sending an advertisement request and receiving an audio advertisement. The memory 103 is configured to store program code and data of the terminal device 10.

The processor 101 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 104 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 2A, but this does not mean that there is only one bus or only one type of bus.

The foregoing describes a structure of the terminal device in FIG. 2A. The following describes a structure of the cloud apparatus with reference to FIG. 2B.

FIG. 2B is a diagram of a possible logical structure of a cloud apparatus according to an embodiment of this application. As shown in FIG. 2B, the cloud apparatus 20 provided in this embodiment of this application includes a processor 201, a communication interface 202, a memory 203, and a bus 204. The processor 201, the communication interface 202, and the memory 203 are connected to each other through the bus 204. In this embodiment of this application, the processor 201 is configured to control and manage an action of the cloud apparatus 20. For example, the processor 201 is configured to perform a process of determining an audio advertisement. The communication interface 202 is configured to support the cloud apparatus 20 in performing communication. For example, the communication interface 202 may perform steps of receiving an advertisement request and sending an audio advertisement. The memory 203 is configured to store program code and data of the cloud apparatus 20.

The processor 201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 204 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 2B, but this does not mean that there is only one bus or only one type of bus.

The following describes an audio advertisement delivery method provided in an embodiment of this application. Content executed by a cloud in the method may be executed by the cloud, or may be executed by a component (for example, a processor, a chip, or a chip system) in the cloud.

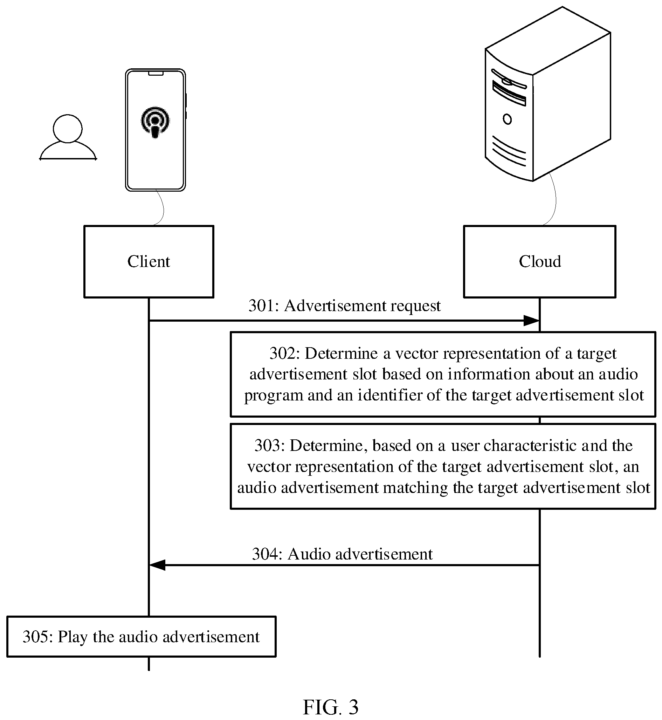

FIG. 3 is a diagram of an embodiment of an audio advertisement delivery method according to an embodiment of this application.

As shown in FIG. 3, the embodiment of the audio advertisement delivery method provided in this embodiment of this application includes the following steps.

301: A client sends an advertisement request to a cloud. Correspondingly, the cloud receives the advertisement request from the client.

The advertisement request is triggered when the client plays an audio program.

In this embodiment of this application, a time when the client plays the audio program usually means a time when the client plays the audio program near a target advertisement slot. Usually, the advertisement request is triggered at a preset time point before the target advertisement slot is reached. The preset time point may be a time point that is five seconds or another value representing a time length before the target advertisement slot.

In this embodiment of this application, the advertisement request includes information about the audio program, an identifier of the target advertisement slot, and a user characteristic.

In this embodiment of this application, the target advertisement slot is one of at least one advertisement slot mined in the audio program, for example, the advertisement slot 1 corresponding to the audio program 1 in FIG. 1B. Certainly, the target advertisement slot may alternatively be another advertisement slot.

302: The cloud determines a vector representation of the target advertisement slot based on the information about the audio program and the identifier of the target advertisement slot.

The vector representation of the target advertisement slot is used to describe content related in the audio program in a period of time before the target advertisement slot.

In this embodiment of this application, the information about the audio program may be an identifier, an index, or the like of the audio program. The audio program is an audio program to be played, being played, or just played on the client. The audio program may be an audio book, a song in an audio form, a cross talk, current news, or the like.

In this embodiment of this application, in an advertisement slot mining phase, one or more advertisement slots may be mined in the audio program, and each advertisement slot in one audio program has a unique identifier. Each advertisement slot has a vector representation. An identifier of a same advertisement slot is associated with a vector representation of the advertisement slot. In addition, a representation and a vector representation of at least one advertisement slot in each audio program and the audio program are stored in an associated manner. Such information may be stored in an audio content library of a cloud platform. The vector representation of the advertisement slot is a vector obtained by encoding content related in a period of time before the advertisement slot. The "period of time" in this application may be a duration, for example, one minute or another value representing a time length. For another example, in an implementation, a specific value may be preset. In an implementation, the duration may be randomly selected within a range.

As shown in FIG. 1B, if the information about the audio program is the audio program 1, and the identifier of the target advertisement slot is the advertisement slot 1, the vector representation 1 of the advertisement slot 1 may be determined based on the audio program 1 and the advertisement slot 1.

303: The cloud determines, based on the user characteristic and the vector representation of the target advertisement slot, an audio advertisement matching the target advertisement slot.

In this embodiment of this application, the user characteristic may reflect a preference of a user for a type or style of an audio program, for example, a type and content of an audio program that the user likes to listen to, and an audio program narrator that the user likes.

In this embodiment of this application, because the vector representation of the advertisement slot may reflect content of the audio program, when audio advertisement matching is performed, an audio advertisement associated with the content of the audio program may be selected. **In** this way, the audio advertisement and the audio program are highly merged, and continuity of listening to the audio program by the user is not affected. The cloud further determines the audio advertisement with reference to the preference of the user, and may obtain an audio advertisement that has a best matching degree with the target advertisement slot.

304: The cloud sends the audio advertisement to the client. Correspondingly, the client receives the audio advertisement from the cloud.

The audio advertisement is used by the client to be played when the audio program is played to the target advertisement slot.

305: The client plays the audio advertisement at the target advertisement slot.

**In** this embodiment of this application, one or more audio advertisements closely related to the audio program that the user is currently listening to before the target advertisement slot may be determined based on the vector representation of the target advertisement slot, and then, the audio advertisements may be further filtered or processed based on the user characteristic, to obtain the audio advertisement matching the target advertisement slot. Because the audio advertisement determined in this application has a higher matching degree with the audio program, and the user characteristic is combined, a personalized requirement of the user can be better met, and delivery effect of the audio advertisement can be improved.

Step 303 may include: The cloud retrieves a plurality of audio advertisements from an audio advertisement library based on the vector representation of the target advertisement slot, and the cloud obtains, based on the user characteristic, the audio advertisement matching the target advertisement slot from the plurality of audio advertisements.

Further, the method may include: The cloud predicts completion rates of the plurality of audio advertisements based on the user characteristic and an advertisement ranking model. An audio advertisement with a highest completion rate is the audio advertisement matching the target advertisement slot or a source advertisement of the audio advertisement matching the target advertisement slot, and the advertisement ranking model is a model whose input is a user characteristic and whose output is a completion rate.

In other words, in this embodiment of this application, a process of determining the audio advertisement may include several parts: advertisement retrieval, advertisement ranking, and style transfer, which are separately described in the following.

### 1. Advertisement retrieval

The advertisement retrieval means obtaining, from the audio advertisement library, a plurality of audio advertisements related to content described by the vector representation of the target advertisement slot.

### 2. Advertisement ranking

The cloud may score each retrieved audio advertisement by using the advertisement ranking model, or may perform ranking based on a score, and select an audio advertisement with a highest score.

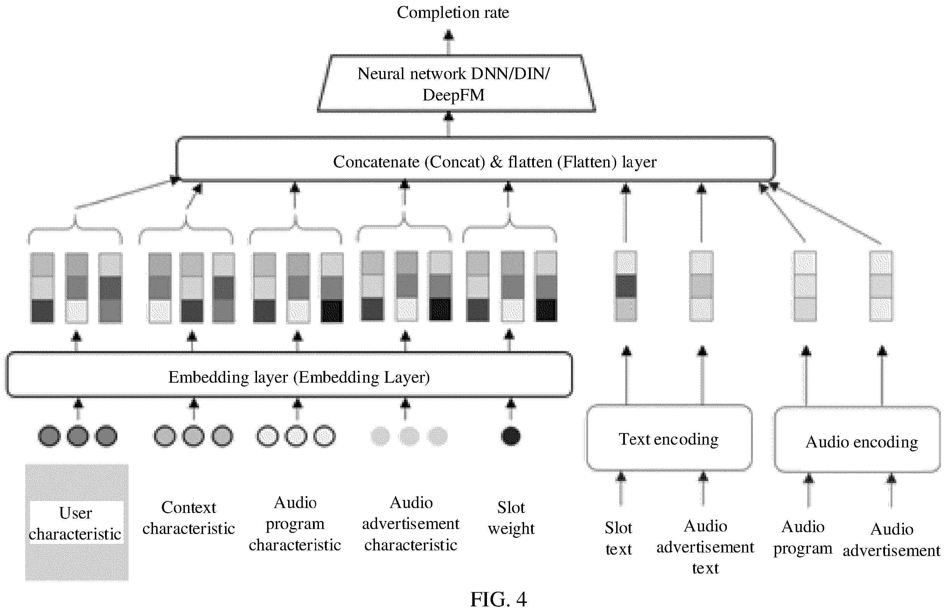

In this embodiment of this application, the advertisement ranking model is a model whose input is a user characteristic and whose output is a completion rate. The advertisement ranking model may be a machine learning model. For the advertisement ranking model, refer to FIG. 4 for understanding. As shown in FIG. 4, an input to the advertisement ranking model may include an audio program, an audio advertisement, audio advertisement text (an audio advertisement in a text form), and slot text (an advertisement slot in a text form), and may further include a slot weight, an audio advertisement characteristic, an audio program characteristic, a context characteristic, and the like. In addition, the input to the advertisement ranking model provided in this embodiment of this application further includes the user characteristic. In this way, after an embedding layer processes the slot weight, the audio advertisement characteristic, the audio program characteristic, the context characteristic, and user characteristic information, and after the embedding layer performs audio encoding on the audio program and the audio advertisement and performs text encoding on the audio advertisement text and the slot text, the processed data and the encoded data are both input to a concatenate (Concat) & flatten (Flatten) layer for processing. After processing, a completion rate of the audio advertisement for the user is input through a neural network. The neural network may include a convolutional neural network (deep neural network, DNN), a deep interest network (deep interest network, DIN), or a deep factorization machine (deep factorization machine, DeepFM).

The plurality of retrieved audio advertisements may be separately input to the advertisement ranking model, or may be input to the advertisement ranking model at a time or in batches, so that a completion rate of each audio advertisement may be obtained. A value of the completion rate may be understood as a score of an audio advertisement, and an audio advertisement with a highest score is an audio advertisement with a highest completion rate.

The completion rate is a predicted probability that the audio advertisement is played in its entirety. A closer alignment of content and a style of one audio advertisement to a user preference indicates a higher probability that the audio advertisement is played in its entirety and indicates better delivery effect after advertisement delivery. Therefore, completion rates of the plurality of retrieved audio advertisements may be predicted based on the user characteristic, and the audio advertisement with the highest completion rate is determined as the audio advertisement. In this way, delivery effect of the audio advertisement can be improved.

### 3. Style transfer

In this embodiment of this application, after determining the audio advertisement with the highest completion rate by using the advertisement ranking model, the cloud may adjust a style of the audio advertisement with the highest completion rate based on the user characteristic and a style of an audio program that is to be played or is being played by the user, to obtain the audio advertisement matching the target advertisement slot. In this way, acceptance of the audio advertisement by the user can be improved, thereby improving delivery effect of the audio advertisement.

It should be noted that, after the audio advertisement with the highest completion rate is determined, the audio advertisement with the highest completion rate may be directly determined as the audio advertisement matching the target advertisement slot, or the audio advertisement with the highest completion rate may be used as a source advertisement to perform the foregoing style transfer, to obtain the audio advertisement matching the target advertisement slot. This is not limited in this application.

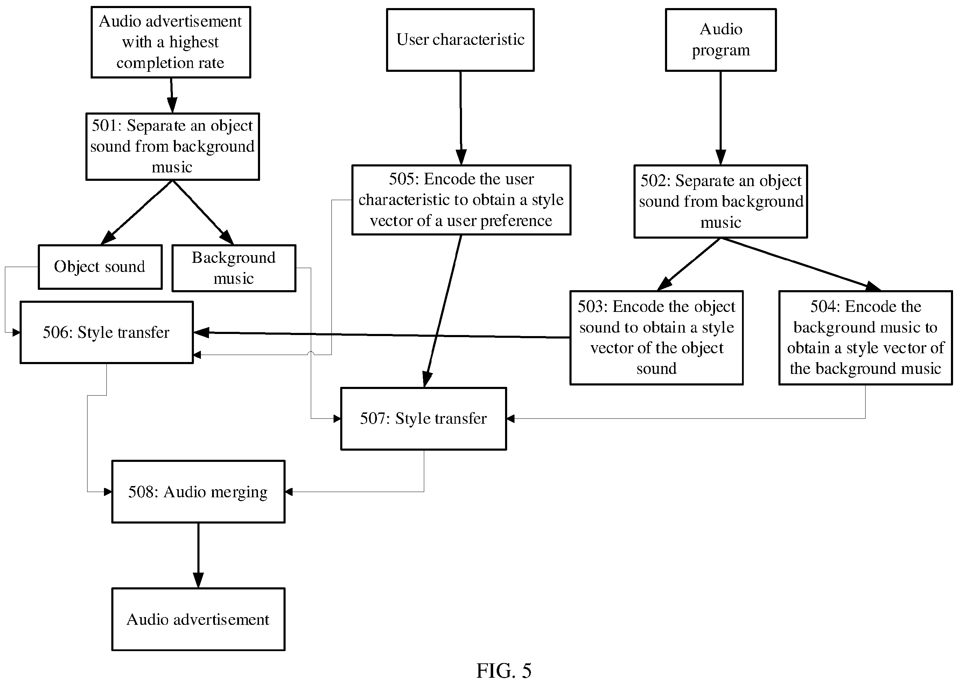

For a style transfer process provided in this embodiment of this application, refer to FIG. 5 for understanding.

As shown in FIG. 5, the process may include the following steps.

501: The cloud separates an object sound from background music in the audio advertisement.

The object sound is usually a main sound in an audio advertisement, for example, a narrator narrating the advertisement.

502: The cloud separates an object sound from background music in the audio program.

503: The cloud encodes the object sound in the audio program to obtain a style vector of the object sound.

504: The cloud encodes the background music in the audio program to obtain a style vector of the background music.

505: The cloud encodes the user characteristic to obtain a style vector of a user preference.

506: The cloud adjusts, based on the style vector of the object sound and the style vector of the user preference, an object sound in the audio advertisement with the highest score.

In step 506, a style of the object sound in the audio advertisement is transferred.

507: The cloud adjusts the background music in the audio advertisement with the highest score based on the style vector of the background music and the style vector of the user preference.

In step 507, a style of the background sound in the audio advertisement is transferred.

The style transfer may be replacement or partial adjustment of the style of the object sound or the background music.

508: The object sound and the background music after the style transfer in step 506 and step 507 are merged, to obtain the audio advertisement.

It should be noted that, if no background music exists in the audio advertisement or the audio program, steps related to background music processing may not be performed, for example, one or more steps in step 501, 502, 504, 507, or 508.

In this embodiment of this application, a style of the audio advertisement after adjustment is consistent with the style of the audio advertisement, so that a style preference of the user can be met and user experience can be improved, thereby improving delivery effect of the audio advertisement.

The foregoing describes a process of delivering the audio advertisement online, and the following further describes a process of mining the advertisement slot offline or online in FIG. 1B.

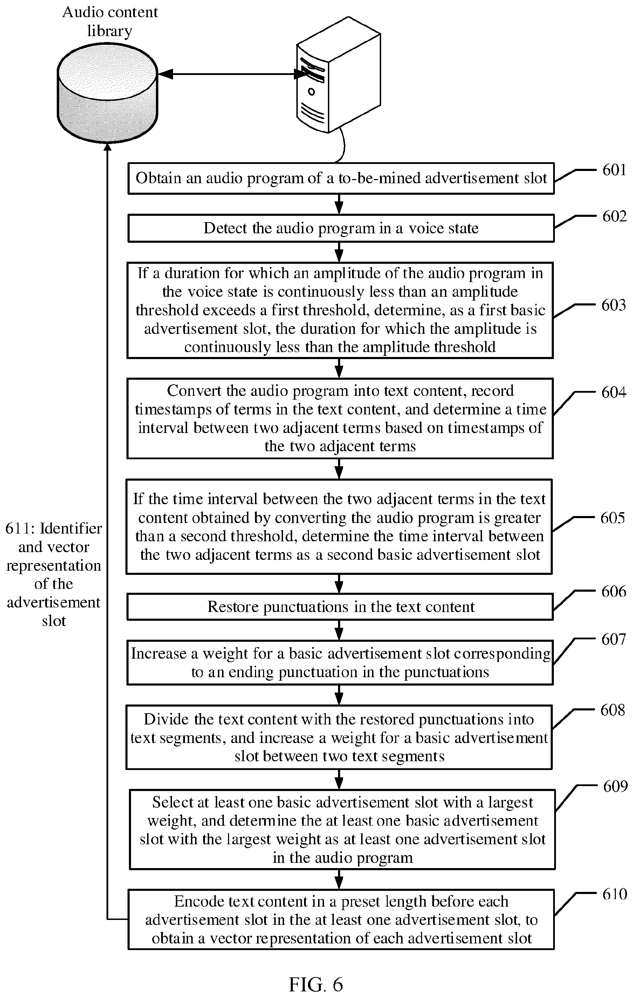

As shown in FIG. 6, an embodiment of an advertisement slot mining method according to an embodiment of this application includes the following steps.

601: A cloud obtains an audio program of a to-be-mined advertisement slot.

The cloud may obtain, from an audio content library, the audio program of the to-be-mined advertisement slot.

602: The cloud detects the audio program in a voice state.

603: When time domain information is an amplitude, if a duration for which an amplitude of the audio program in the voice state is continuously less than an amplitude threshold exceeds a first threshold, the cloud determines the duration for which the amplitude is continuously less than the amplitude threshold as a first basic advertisement slot.

604: The cloud converts the audio program into text content, records timestamps of terms in the text content, and determines a time interval between two adjacent terms based on timestamps of the two adjacent terms.

The first threshold and a second threshold may be the same or may be different.

605: If the time interval between the two adjacent terms in the text content obtained after conversion of the audio program is greater than the second threshold, the cloud determines the time interval between the two adjacent terms as a second basic advertisement slot.

606: The cloud restores punctuations in the text content.

607: The cloud increases a weight for a basic advertisement slot corresponding to an ending punctuation in the punctuations.

The basic advertisement slot in this embodiment of this application is an advertisement slot from a union of the first basic advertisement slot and the second basic advertisement slot.

Certainly, the first basic advertisement slot and the second basic advertisement slot may overlap.

608: The cloud divides the text content with the restored punctuations into text segments, and increases a weight for a basic advertisement slot between two text segments.

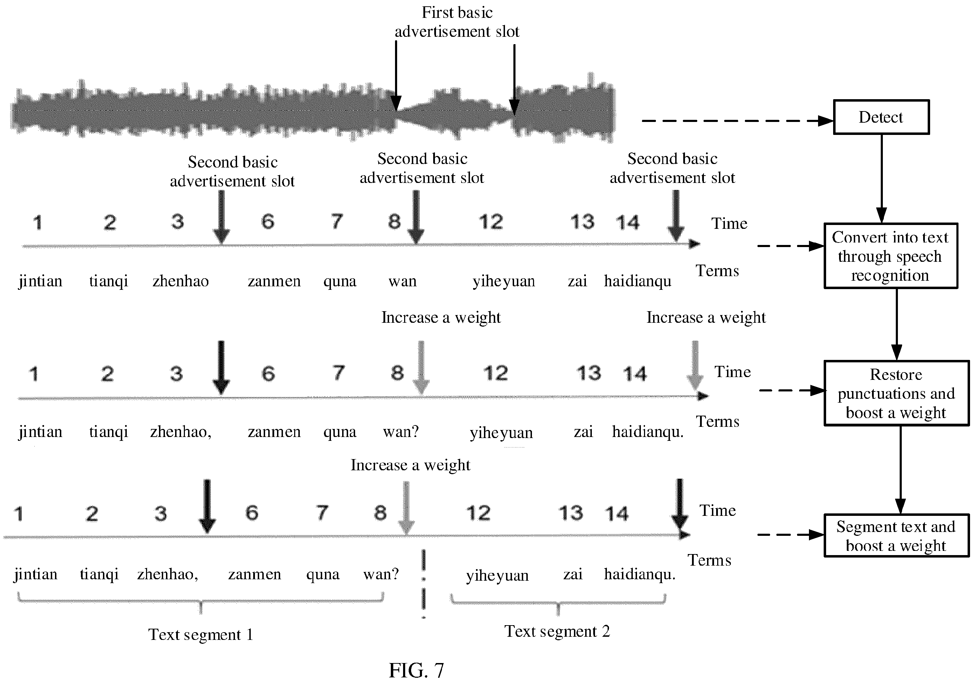

For a process of step 602 to step 608, refer to an example in FIG. 7 for understanding.

As shown in FIG. 7, the cloud may first detect an audio program (a segment shown in FIG. 7 may be a segment clipped from the audio program), and detect that an amplitude of one audio segment is very small (less than the amplitude threshold) and a duration exceeds the first threshold. In this case, it may be determined that an object in the audio program does not make a sound in the duration, that is, the object is in a pause state, and the duration may also be determined as one first basic advertisement slot.

Then, the cloud may convert the audio segment shown in FIG. 7 into text through speech recognition. It can be learned from FIG. 7 that converted text content includes: "jintian tianqi zhenhao zanmen quna wan yiheyuan zai haidianqu (Today's weather is really nice. Where shall we go for fun? The Summer Palace in Haidian District)". A timestamp of "jintian (today)" is 1, a timestamp of "tianqi (weather)" is 2, a timestamp of "zhenhao (really nice)" is 3, a timestamp of "zanmen (we)" is 6, a timestamp of "quna (where to go)" is 7, a timestamp of "wan (for fun)" is 8, a timestamp of "yiheyuan (the Summer Palace)" is 12, a timestamp of "zai (in)" is 13, and a timestamp of "haidianqu (Haidian District)" is 14. It may be determined from the timestamps of the terms that timestamps 4 and 5 are missing between "zhenhao (really nice)" and "zanmen (we)", that is, a pause occurs between the two terms "zhenhao (really nice)" and "zanmen (we)". If the second threshold is equal to 1 (or another value between 0 and 2), a position between "zhenhao (really nice)" and "zanmen (we)" may be determined as one second basic advertisement slot. Similarly, timestamps 9, 10, and 11 are missing between "wan (for fun)" and "yiheyuan (the Summer Palace)". In this case, a position between "wan (for fun)" and "yiheyuan (the Summer Palace)" may be determined as one second basic advertisement slot. A position following "haidianqu (Haidian District)" may also be determined as one second basic advertisement slot. It can be learned from FIG. 7 that the first basic advertisement slot basically overlaps the second basic advertisement slot between "wan (for fun)" and "yiheyuan (the Summer Palace)". For ease of description, the first basic advertisement slot and the second basic advertisement slot shown in FIG. 7 are collectively referred to as basic advertisement slots in the following.

Next, punctuations in the text can be restored. As shown in FIG. 7, the text content with the restored punctuations includes: "jintian tianqi zhenhao, zanmen quna wan? yiheyuan zai haidianqu (Today's weather is really nice. Where shall we go for fun? The Summer Palace in Haidian District)." Because a question mark "?" and a period "." in the punctuations usually have longer pauses than a comma ",", weights of two basic advertisement slots corresponding to "?" and "." may be boosted. In other words, the weights of the two basic advertisement slots are increased.

Further, the text content shown in FIG. 7 may be segmented. "jintian tianqi zhenhao, zanmen quna wan? (Today's weather is really nice. Where shall we go for fun?)" may be segmented as a text segment 1, and "yiheyuan zai haidianqu (The Summer Palace in Haidian District)" may be segmented as a text segment 2. A pause at a segmentation position between the two text segments is longer. Therefore, a weight of a basic advertisement slot at the segmentation position between the two text segments may be further boosted. In other words, the weight of the basic advertisement slot between "wan (for fun)" and "yiheyuan (the Summer Palace)" is further increased.

609: The cloud selects at least one basic advertisement slot with a largest weight, and determines the at least one basic advertisement slot with the largest weight as at least one advertisement slot in the audio program.

After the foregoing operations are performed, the weight of the basic advertisement slot between "wan (for fun)" and "yiheyuan (the Summer Palace)" is the largest. If an advertisement slot is selected from the audio segment shown in FIG. 7, the basic advertisement slot between "wan (for fun)" and "yiheyuan (the Summer Palace)" may be selected as the advertisement slot of the audio segment.

610: The cloud encodes text content in a preset length before each advertisement slot in the at least one advertisement slot, to obtain a vector representation of each advertisement slot.

The cloud may encode the text content "jintian tianqi zhenhao, zanmen quna wan? (Today's weather is really nice. Where shall we go for fun?)", to obtain a vector representation of the advertisement slot between "wan (for fun)" and "yiheyuan (the Summer Palace)".

611: The cloud may send an identifier and the vector representation of each advertisement slot to the audio content library, and store the identifier and the vector representation of each advertisement slot and audio content in an associated manner.

In this way, when a user plays the audio segment to the advertisement slot between "wan (for fun)" and "yiheyuan (the Summer Palace)", an audio advertisement related to travel may be selected for pushing. During pushing, a city in which the user is located and a type of a tourist attraction that the user visited historically may further be considered to obtain through filtering and deliver an audio advertisement matching "jintian tianqi zhenhao, zanmen quna wan? (Today's weather is really nice. Where shall we go for fun?)", to the advertisement slot between "wan (for fun)" and "yiheyuan (the Summer Palace)". In this way, the audio program and the audio advertisement are continuous, and listening experience of the user is not affected, thereby increasing delivery effect of the audio advertisement.

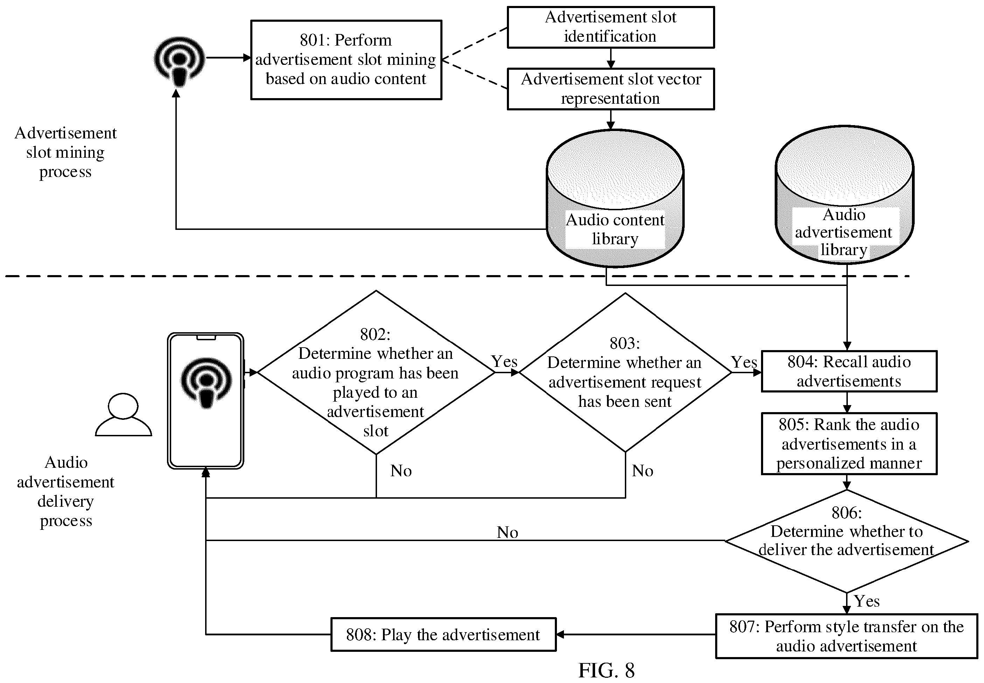

To better understand a relationship between an advertisement mining process and an advertisement delivery process provided in embodiments of this application, the following describes the two processes in combination with reference to FIG. 8.

801: Perform advertisement slot mining based on audio content.

The process may include advertisement slot identification and advertisement slot vector representation.

For a process of step 801, refer to the foregoing steps 601 to 611. Details are not described herein again.

802: In an audio advertisement delivery process, when playing an audio program, a client determines whether the audio program has been played to an advertisement slot, where if the audio program has been played to the advertisement slot, step 803 is performed, or if the audio program has not been played to the advertisement slot, the audio program continues to be played.

803: When the audio program has been played to the advertisement slot, determine whether an advertisement request has been sent, where if the advertisement request has been sent, step 804 is performed; or if the advertisement request has not been sent, the audio program continues to be played.

If plenty of advertisements have been played, that is, a duration for playing the audio advertisement exceeds a preset value, an advertisement is not played in a subsequent advertisement slot, and no advertisement request needs to be sent.

804: Retrieve a plurality of audio advertisements from an audio advertisement library.

805: Rank the plurality of audio advertisements in a personalized manner.

Steps 804 and 805 may be understood with reference to the foregoing descriptions of advertisement retrieval and advertisement scoring.

806: Determine whether to deliver the audio advertisement.

Whether to deliver the audio advertisement is determined based on a scoring result. If scores of all audio advertisements are lower than a score threshold, the audio advertisement is not delivered; or if a score of an audio advertisement with a highest score is higher than a score threshold, it is determined to deliver the audio advertisement with the highest score, and step 807 is performed.

807: Perform style transfer on the audio advertisement.

Step 807 may be understood with reference to the foregoing descriptions of style transfer.

808: Play an audio advertisement obtained after the style transfer and then continue to play the audio program.

In the foregoing advertisement slot mining process, a vector representation is generated with reference to text content. In this way, an audio advertisement better matching the audio content can be determined when the advertisement is delivered. In addition, a user characteristic is used when the audio advertisement is delivered. In this way, a personalized requirement of a user can be better met, and delivery effect of the audio advertisement can be improved.

The foregoing describes the advertisement slot mining method and the audio advertisement delivery method. The following describes a cloud apparatus and a client in embodiments of this application with reference to the accompanying drawings.

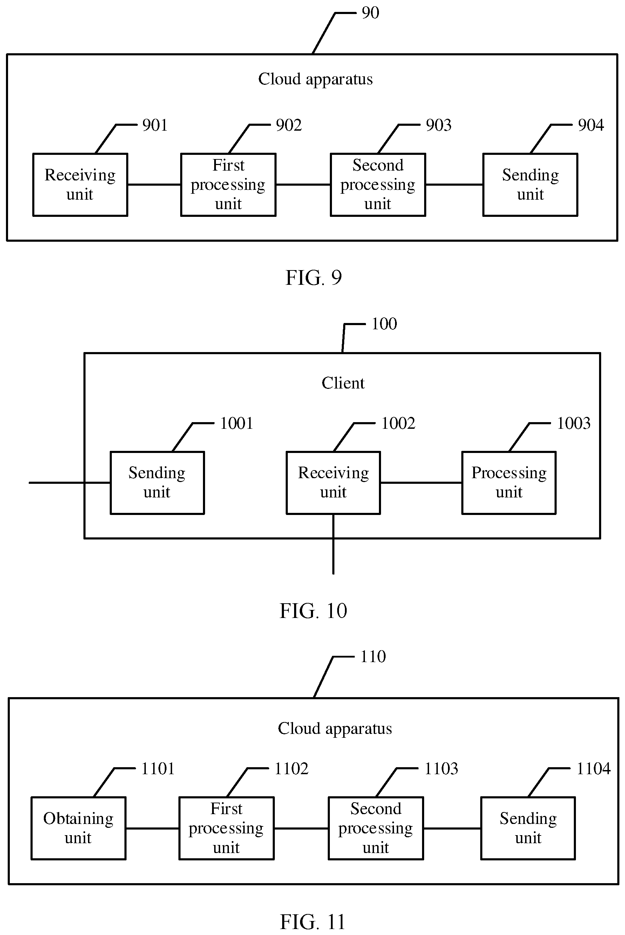

As shown in FIG. 9, a structure of a cloud apparatus 90 provided in an embodiment of this application includes the following units.

A receiving unit 901 is configured to receive an advertisement request from a client. The advertisement request includes information about an audio program, an identifier of a target advertisement slot, and a user characteristic, the target advertisement slot is one of at least one advertisement slot mined in the audio program, and the advertisement request is triggered when the client plays the audio program. The receiving unit 901 may perform step 301 in the foregoing method embodiment.

A first processing unit 902 is configured to determine a vector representation of the target advertisement slot based on the information about the audio program and the identifier of the target advertisement slot. The vector representation of the target advertisement slot is used to describe content related in the audio program in a period of time before the target advertisement slot. The first processing unit 902 may perform step 302 in the foregoing method embodiment.

A second processing unit 903 is configured to obtain, based on the user characteristic and the vector representation of the target advertisement slot, an audio advertisement matching the target advertisement slot. The second processing unit 903 may perform step 303 in the foregoing method embodiment.

A sending unit 904 is configured to send the audio advertisement to the client. The audio advertisement is used by the client to be played when the audio program is played to the target advertisement slot. The sending unit 904 may perform step 304 in the foregoing method embodiment.

In this embodiment of this application, one or more audio advertisements closely related to the audio program that the user is currently listening to before the target advertisement slot may be determined based on the vector representation of the target advertisement slot, and then, the audio advertisements may be further filtered or processed based on the user characteristic, to obtain the audio advertisement matching the target advertisement slot. Because the audio advertisement determined in this application has a higher matching degree with the audio program, and the user characteristic is combined, a personalized requirement of the user can be better met, and delivery effect of the audio advertisement can be improved.

Optionally, the second processing unit 903 is specifically configured to: retrieve a plurality of audio advertisements from an audio advertisement library based on the vector representation of the target advertisement slot; and obtain, based on the user characteristic, the audio advertisement matching the target advertisement slot from the plurality of audio advertisements.

Optionally, the second processing unit 903 is specifically configured to predict completion rates of the plurality of audio advertisements based on the user characteristic and an advertisement ranking model. An audio advertisement with a highest completion rate is the audio advertisement matching the target advertisement slot or a source advertisement of the audio advertisement matching the target advertisement slot, and the advertisement ranking model is a model whose input is a user characteristic and whose output is a completion rate.

Optionally, the second processing unit 903 is specifically configured to: when the audio advertisement with the highest completion rate is the source advertisement of the audio advertisement matching the target advertisement slot, adjust a style of the audio advertisement with the highest completion rate based on a style of the audio program and the user characteristic, to obtain the audio advertisement matching the target advertisement slot.

Optionally, the second processing unit 903 is specifically configured to: adjust an object sound in the audio advertisement with the highest completion rate based on a style vector of an object sound in the audio program and a style vector of a user preference, where the style vector of the object sound in the audio program is obtained by encoding the object sound in the audio program, and the style vector of the user preference is obtained by encoding the user characteristic; adjust background music in the audio advertisement with the highest completion rate based on a style vector of background music in the audio program and the style vector of the user preference, where the style vector of the background music in the audio program is obtained by encoding the background music in the audio program; and merge an adjusted object sound in the audio advertisement with the highest completion rate and adjusted background music in the audio advertisement with the highest completion rate, to obtain the audio advertisement matching the target advertisement slot.

Optionally, the first processing unit 902 is further configured to: determine at least one advertisement slot based on time domain information of the audio program in a voice state and text content obtained after the audio program is converted into text; and encode text content in a period of time before each advertisement slot in the at least one advertisement slot, to obtain a vector representation of each advertisement slot.

Optionally, the first processing unit 902 is specifically configured to: when the time domain information is an amplitude, if a duration for which an amplitude of the audio program in the voice state is continuously less than an amplitude threshold exceeds a first threshold, determine the duration for which the amplitude is continuously less than the amplitude threshold as a first basic advertisement slot; if a time interval between two adjacent terms in the text content obtained after conversion of the audio program is greater than a second threshold, determine the time interval between the two adjacent terms as a second basic advertisement slot, where the time interval between the two adjacent terms is determined based on a timestamp for each term during text conversion; and determine the at least one advertisement slot from a union of the first basic advertisement slot and the second basic advertisement slot.

Optionally, the first processing unit 902 is specifically configured to: select at least one advertisement slot with a largest weight from the union of the first basic advertisement slot and the second basic advertisement slot, and determine the at least one advertisement slot as the at least one advertisement slot in the audio program. A weight of each advertisement slot in the at least one advertisement slot is determined based on a punctuation and/or a segmentation position of a text segment corresponding to each advertisement slot.

Optionally, the user characteristic includes a user profile and a behavioral characteristic of a user for a historical audio program.

In this embodiment of this application, operations performed by units in the cloud apparatus 90 are similar to those described in embodiments shown in FIG. 3 to FIG. 8. Details are not described herein again.

As shown in FIG. 10, a structure of a client 100 provided in an embodiment of this application includes the following units.

A sending unit 1001 is configured to send an advertisement request to a cloud when an audio program is played. The advertisement request includes information about the audio program, an identifier of a target advertisement slot, and a user characteristic, and the target advertisement slot is one of at least one advertisement slot mined in the audio program.

A receiving unit 1002 is configured to receive an audio advertisement that matches the target advertisement slot and that is sent by the cloud.

A processing unit 1003 is configured to play the audio advertisement when the audio program is played to the target advertisement slot.

Optionally, the user characteristic includes a user profile and a behavioral characteristic of a user for a historical audio program.

In this embodiment of this application, operations performed by units in the client 100 are similar to those described in embodiments shown in FIG. 3 to FIG. 8. Details are not described herein again.

As shown in FIG. 11, another structure of a cloud apparatus 110 further provided in an embodiment of this application includes the following units.

An obtaining unit 1101 is configured to obtain an audio program of a to-be-mined advertisement slot.

A first processing unit 1102 is configured to determine at least one advertisement slot based on time domain information of the audio program in a voice state and text content obtained after the audio program is converted into text.

A second processing unit 1103 is configured to encode text content in a period of time before each advertisement slot in the at least one advertisement slot, to obtain a vector representation of each advertisement slot.

Optionally, the first processing unit 1102 is specifically configured to: when the time domain information is an amplitude, if a duration for which an amplitude of the audio program in the voice state is continuously less than an amplitude threshold exceeds a first threshold, determine the duration for which the amplitude is continuously less than the amplitude threshold as a first basic advertisement slot; if a time interval between two adjacent terms in the text content obtained after conversion of the audio program is greater than a second threshold, determine the time interval between the two adjacent terms as a second basic advertisement slot, where the time interval between the two adjacent terms is determined based on a timestamp for each term during text conversion; and determine the at least one advertisement slot from a union of the first basic advertisement slot and the second basic advertisement slot.

Optionally, the first processing unit 1102 is specifically configured to: select at least one advertisement slot with a largest weight from the union of the first basic advertisement slot and the second basic advertisement slot, and determine the at least one advertisement slot as the at least one advertisement slot in the audio program. A weight of each advertisement slot in the at least one advertisement slot is determined based on a punctuation and/or a segmentation position of a text segment corresponding to each advertisement slot.

In this embodiment of this application, operations performed by units in the cloud apparatus 110 are similar to those described in embodiments shown in FIG. 3 to FIG. 8. Details are not described herein again.

In another embodiment of this application, a computer-readable storage medium is further provided. The computer-readable storage medium stores computer-executable instructions. When a processor of a cloud apparatus executes the computer-executable instructions, the cloud apparatus performs the steps performed by the cloud apparatus in FIG. 3 to FIG. 8.

In another embodiment of this application, a computer-readable storage medium is further provided. The computer-readable storage medium stores computer-executable instructions. When a processor of a client executes the computer-executable instructions, the client performs the steps performed by the client in FIG. 3 to FIG. 8.

In another embodiment of this application, a computer program product is further provided. The computer program product includes computer program code. When the computer program code is executed on a computer, a computer device performs the steps performed by the cloud apparatus or the client in FIG. 3 to FIG. 8.

**In** another embodiment of this application, a chip system is further provided. The chip system includes one or more interface circuits and one or more processors. The interface circuit and the processor are interconnected through a line. The interface circuit is configured to receive a signal from a memory of a terminal, and send the signal to the processor, where the signal includes computer instructions stored in the memory. When the processor executes the computer instructions, the terminal performs the steps performed by the cloud apparatus or the client in FIG. 3 to FIG. 8. **In** a possible design, the chip system further includes a memory. The memory is configured to store program instructions and data that are necessary for a control device. The chip system may include a chip, or may include a chip and another discrete component.

**In** several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. **In** addition, the displayed or discussed mutual couplings or direct couplings or communication connections may be indirect couplings or communication connections through some interfaces, apparatuses, or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. All or some of the integrated units may be implemented by using software, hardware, firmware, or any combination thereof.

When software is used to implement the integrated units, all or some of the integrated units may be implemented in a form of a computer program product. The computer program product includes one or more computer instructions. When the computer program instructions are loaded and executed on the computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. An audio advertisement delivery method, comprising:
receiving, by a cloud, an advertisement request from a client, wherein the advertisement request comprises information about an audio program, an identifier of a target advertisement slot, and a user characteristic, the target advertisement slot is one of at least one advertisement slot mined in the audio program, and the advertisement request is triggered when the client plays the audio program;
determining, by the cloud, a vector representation of the target advertisement slot based on the information about the audio program and the identifier of the target advertisement slot, wherein the vector representation of the target advertisement slot is used to describe content related in the audio program in a period of time before the target advertisement slot;
obtaining, by the cloud based on the user characteristic and the vector representation of the target advertisement slot, an audio advertisement matching the target advertisement slot; and
sending, by the cloud, the audio advertisement to the client, wherein the client plays the audio advertisement when the audio program is played to the target advertisement slot.

2. The method according to claim 1, wherein that the cloud determines, based on the user characteristic and the vector representation of the target advertisement slot, the audio advertisement matching the target advertisement slot comprises:
retrieving, by the cloud, a plurality of audio advertisements from an audio advertisement library based on the vector representation of the target advertisement slot; and
obtaining, by the cloud based on the user characteristic, the audio advertisement matching the target advertisement slot from the plurality of audio advertisements.

3. The method according to claim 2, wherein the obtaining, by the cloud based on the user characteristic, the audio advertisement matching the target advertisement slot from the plurality of audio advertisements comprises:
predicting, by the cloud, completion rates of the plurality of audio advertisements based on the user characteristic and an advertisement ranking model, wherein an audio advertisement with a highest completion rate is the audio advertisement matching the target advertisement slot or a source advertisement of the audio advertisement matching the target advertisement slot, and the advertisement ranking model is a model whose input is a user characteristic and whose output is a completion rate.

4. The method according to claim 3, wherein when the audio advertisement with the highest completion rate is the source advertisement of the audio advertisement matching the target advertisement slot, the method further comprises:
adjusting, by the cloud, a style of the audio advertisement with the highest completion rate based on a style of the audio program and the user characteristic, to obtain the audio advertisement matching the target advertisement slot.

5. The method according to claim 4, wherein the adjusting, by the cloud, a style of the audio advertisement with the highest completion rate based on a style of the audio program and the user characteristic, to obtain the audio advertisement matching the target advertisement slot comprises:
adjusting, by the cloud, an object sound in the audio advertisement with the highest completion rate based on a style vector of an object sound in the audio program and a style vector of a user preference, wherein the style vector of the object sound in the audio program is obtained by encoding the object sound in the audio program, and the style vector of the user preference is obtained by encoding the user characteristic;
adjusting, by the cloud, background music in the audio advertisement with the highest completion rate based on a style vector of background music in the audio program and the style vector of the user preference, wherein the style vector of the background music in the audio program is obtained by encoding the background music in the audio program; and
merging, by the cloud, an adjusted object sound in the audio advertisement with the highest completion rate and adjusted background music in the audio advertisement with the highest completion rate, to obtain the audio advertisement matching the target advertisement slot.

6. The method according to any one of claims 1 to 5, wherein before the receiving, by a cloud, an advertisement request sent by a client, the method further comprises:
determining, by the cloud, at least one advertisement slot based on time domain information of the audio program in a voice state and text content obtained after the audio program is converted into text; and
encoding, by the cloud, text content in a period of time before each advertisement slot in the at least one advertisement slot, to obtain a vector representation of each advertisement slot.

7. The method according to claim 6, wherein the method further comprises:
storing, by the cloud, the audio program, an identifier of each advertisement slot, and the vector representation of each advertisement slot in an associated manner.

8. The method according to claim 6 or 7, wherein the determining, by the cloud, at least one advertisement slot based on time domain information of the audio program in a voice state and text content obtained after the audio program is converted into text comprises:
when the time domain information is an amplitude, if a duration for which an amplitude of the audio program in the voice state is continuously less than an amplitude threshold exceeds a first threshold, determining, as a first basic advertisement slot by the cloud, the duration for which the amplitude is continuously less than the amplitude threshold;
if a time interval between two adjacent terms in the text content obtained after conversion of the audio program is greater than a second threshold, determining, by the cloud, the time interval between the two adjacent terms as a second basic advertisement slot, wherein the time interval between the two adjacent terms is determined based on a timestamp of each term during text conversion; and
determining, by the cloud, the at least one advertisement slot from a union of the first basic advertisement slot and the second basic advertisement slot.

9. The method according to claim 8, wherein the determining, by the cloud, the at least one advertisement slot from a union of the first basic advertisement slot and the second basic advertisement slot comprises:
selecting, by the cloud, at least one advertisement slot with a largest weight from the union of the first basic advertisement slot and the second basic advertisement slot, and determining the at least one advertisement slot as the at least one advertisement slot in the audio program, wherein a weight of each advertisement slot in the at least one advertisement slot is determined based on a punctuation and/or a segmentation position of a text segment corresponding to each advertisement slot.

10. The method according to any one of claims 1 to 9, wherein the user characteristic comprises a user profile and a behavioral characteristic of a user for a historical audio program.

11. An audio advertisement delivery method, comprising:
sending, by a client, an advertisement request to a cloud when playing an audio program, wherein the advertisement request comprises information about the audio program, an identifier of a target advertisement slot, and a user characteristic, and the target advertisement slot is one of at least one advertisement slot mined in the audio program;
receiving, by the client, an audio advertisement that matches the target advertisement slot and that is sent by the cloud; and
playing, by the client, the audio advertisement when the audio program is played to the target advertisement slot.

12. The method according to claim 11, wherein the user characteristic comprises a user profile and a behavioral characteristic of a user for a historical audio program.

13. An advertisement slot mining method, comprising:
obtaining, by a cloud, an audio program of a to-be-mined advertisement slot;
determining, by the cloud, at least one advertisement slot based on time domain information of the audio program in a voice state and text content obtained after the audio program is converted into text; and
encoding, by the cloud, text content in a period of time before each advertisement slot in the at least one advertisement slot, to obtain a vector representation of each advertisement slot.

14. The method according to claim 13, wherein the method further comprises:
storing, by the cloud, the audio program, an identifier of each advertisement slot, and the vector representation of each advertisement slot in an associated manner.

15. The method according to claim 13 or 14, wherein the determining, by the cloud, at least one advertisement slot based on time domain information of the audio program in a voice state and text content obtained after the audio program is converted into text comprises:
when the time domain information is an amplitude, if a duration for which an amplitude of the audio program in the voice state is continuously less than an amplitude threshold exceeds a first threshold, determining, as a first basic advertisement slot by the cloud, the duration for which the amplitude is continuously less than the amplitude threshold;
if a time interval between two adjacent terms in the text content obtained after conversion of the audio program is greater than a second threshold, determining, by the cloud, the time interval between the two adjacent terms as a second basic advertisement slot, wherein the time interval between the two adjacent terms is determined based on a timestamp of each term during text conversion; and
determining, by the cloud, the at least one advertisement slot from a union of the first basic advertisement slot and the second basic advertisement slot.

16. The method according to claim 15, wherein the determining, by the cloud, the at least one advertisement slot from a union of the first basic advertisement slot and the second basic advertisement slot comprises:
selecting, by the cloud, at least one advertisement slot with a largest weight from the union of the first basic advertisement slot and the second basic advertisement slot, and determining the at least one advertisement slot with the largest weight as the at least one advertisement slot in the audio program, wherein a weight of each advertisement slot in the at least one advertisement slot is determined based on a punctuation and/or a segmentation position of a text segment corresponding to each advertisement slot.

17. A cloud apparatus, comprising a communication interface, a processor, and a memory, wherein the communication interface and the processor are coupled to the memory, the memory is configured to store a program or instructions, and when the program or the instructions are executed by the processor, the cloud apparatus is enabled to perform the method according to any one of claims 1 to 10, or perform the method according to any one of claims 13 to 16.

18. A client, comprising a transceiver, a processor, and a memory, wherein the transceiver and the processor are coupled to the memory, the memory is configured to store a program or instructions, and when the program or the instructions are executed by the processor, the client is enabled to perform the method according to claim 11 or 12.

19. A computer-readable storage medium, wherein the computer-readable storage medium stores instructions, and when the instructions are run on a computer device, the computer device is enabled to perform the method according to any one of claims 1 to 16.

20. A computer program product, wherein the computer program product comprises computer program code, and when the computer program code is run on a computer device, the computer device is enabled to perform the method according to any one of claims 1 to 16.

21. A chip system, wherein the chip system comprises one or more interface circuits and one or more processors; the interface circuit and the processor are interconnected through a line; the interface circuit is configured to receive a signal from a memory of a cloud apparatus, and send the signal to the processor, wherein the signal comprises computer instructions stored in the memory; and when the processor executes the computer instructions, the cloud apparatus performs the method according to any one of claims 1 to 10, or performs the method according to any one of claims 13 to 16.

22. A chip system, wherein the chip system comprises one or more interface circuits and one or more processors; the interface circuit and the processor are interconnected through a line; the interface circuit is configured to receive a signal from a memory of a client, and send the signal to the processor, wherein the signal comprises computer instructions stored in the memory; and when the processor executes the computer instructions, the client performs the method according to claim 11 or 12.

23. An audio advertisement system, comprising a client and a cloud, wherein the cloud is configured to perform the method according to any one of claims 1 to 10, and the client is configured to perform the method according to claim 11 or 12.
